# EUROPEAN PATENT APPLICATION

(11) **EP 2 716 746 A1**
(43) Date of publication of application: **09.04.2014**
(21) Application number: 12793855.3
(22) Date of filing: 29.05.2012
(51) Int. Cl.: C11B 1/06, A23D 9/02, C11B 3/00

(54) **METHOD FOR PRODUCING PALM OIL COMPRISING STEP OF REMOVING FREE CHLORINE**

(30) Priority: 01.06.2011 JP 2011123352
(71) Applicant: Showa Sangyo Co., Ltd., Tokyo 101-8521 (JP)
(72) Inventor: YAMAMOTO, Kyoko, Funabashi-shi Chiba 273-0015 (JP); HANEISHI, Kazuaki, Funabashi-shi Chiba 273-0015 (JP)
(74) Representative: TBK
(86) International application number: PCT/JP2012/063691
(87) International publication number: WO 2012/165397

(57) **Abstract**

Object: A method for producing palm oil is provided which is able to inexpensively suppress formation of 3-monochloropropane- 1,2-diol fatty acid esters.

Solution: In a method for producing crude palm oil from which free chlorine has been removed, the method includes a step of removing free chlorine from pressed palm oil after pressing in an oil extraction process and/or a step of removing free chlorine from crude palm oil before refining in a refining process. The step of removing free chlorine is a step of washing with water once or more. Crude palm oil is also provided in which a content of free chlorine is reduced to 2 ppm or less by the above production method. Refined palm oil is further provided in which a content of 3-monochloropropane-1,2-diol fatty acid esters is reduced to 1 mg/kg or less by refining the crude palm oil.

## Description

### Technical Field

The present invention relates to a method for producing crude palm oil from which free chlorine has been removed. The present invention further relates to provide crude palm oil in which a free chloride content is reduced to 2 ppm or less, and refined palm oil in which a content of 3-monochloropropane- 1,2-diol fatty acid esters is 1 mg/kg or less by refining the crude palm oil.

### Background Art

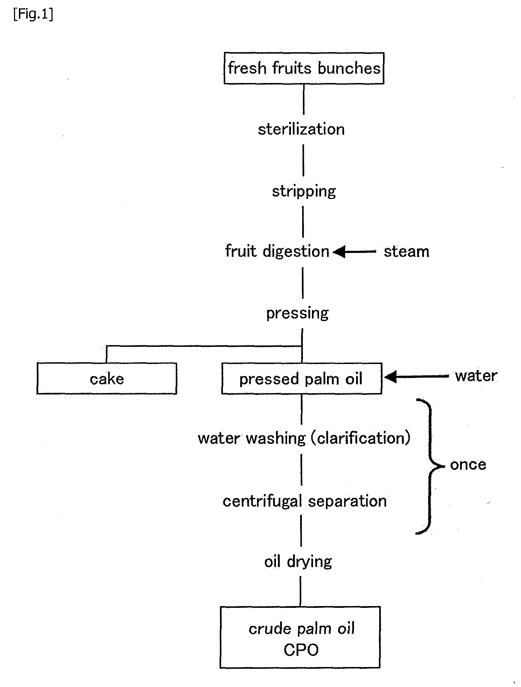

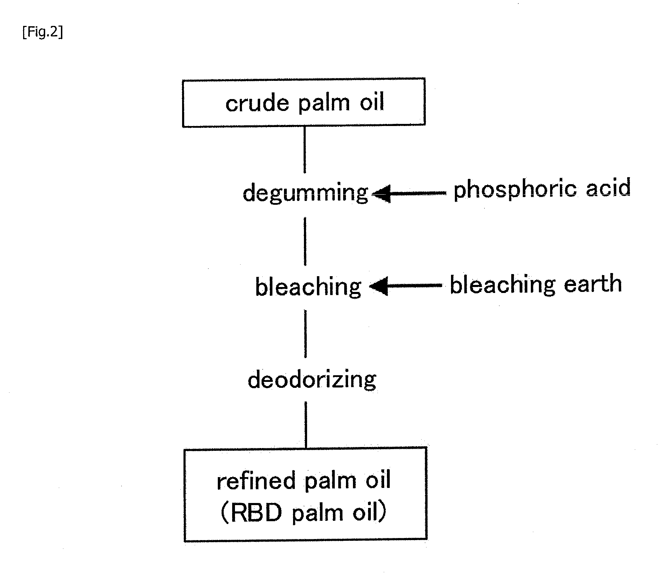

Palm oil is mainly produced in Malaysia and Indonesia, and a palm oil production process comprises an oil extraction process of pressing oil out of mesocarps of palm fruits, and a refining process of refining crude palm oil. As refining process, there are a physical refining process and a chemical refining process. At present, the physical refining process is mainly used because of advantages such as simplified refining, ensuring a high yield, and providing fatty acids with good quality. The physically refined RBD (Refined Bleached Deodorized) palm oil is exported and in imported countries such as Japan, the RBD palm oil is used after rebleaching and redeodorizing in many cases. Figs. 1 and 2 illustrate respective flows of the oil extraction process and the refining process (physical refining process).

Through recent studies, it is clarified that foods, particularly refined edible oils and fats, contain 3-monochloropropane-1,2-diol or glycidol found to be ester-bounded with fatty acids (see Non-Patent Documents 1, 2 and 3). Although a conclusion regarding risk evaluation about esterified chloropropanols is not yet reached, development of techniques for reducing chloropropanols is demanded in terms of risk management.

To suppress formation of chloropropanol esters and glycidol esters, there have been proposed a method of employing adsorbents, such as silica gel and activated carbon, or performing enzyme or alkali treatment before a process in which glyceride oils and fats are heated to 100 degrees C or higher (e.g., bleaching and deodorizing in refining, a process of producing hydrogenated oils and fats, a process of producing ester-exchanged oils and fats, or a cooking process)(Patent Document 1), and a method of treating glyceride oils and fats with silica gel and/or basic activated carbon, after bleaching and deodorizing (Patent Document 2). In addition, Non-Patent Document 4 publicizes a research for removing 3-monochloropropane-1,2-diol fatty acid esters from oils and fats.

### List of Prior-Art Documents

### Patent Document

Patent Document 1: W02010/126136
Patent Document 2: W02011/040539

### Non-Patent Document

Non-Patent Document 1: Food Addit Contam, Vol.23, No.12, p.1290-1298 (2006)
Non-Patent Document 2: LWT Food Sci Technol, Vol.42, No.10, p.1751-1754(2009)
Non-Patent Document 3: ILSI Europe Report Series: 3-MCPD esters in food products. Summary report of a workshop held in February 2009 in International Life Sciences Institute, Brussels, Belgium
Non-Patent Document 4: Eur J Lipid Sci Technol, Vol.112, No.5, p.552-556 (2010)

### Summary of the Invention

### Problems to be Solved by the Invention

The physical refining process that is currently a major in refining of palm oil, applies heat for bleaching and deodorizing to palm oil still containing free chlorine, which is a substance causing formation of 3-monochloropropane-1,2-diol fatty acid esters. Therefore, the 3-monochloropropane-1,2-diol fatty acid esters are formed during the refining process.

An object of the present invention is to provide a method for producing palm oil, the method being able to inexpensively suppress formation of 3-monochloropropane-1,2-diol fatty acid esters. Another object of the present invention is to provide palm oil, more specifically, crude palm oil in which a free chloride content is reduced to 2 ppm or less, and refined palm oil in which a content of 3-monochloropropane- 1,2-diol fatty acid esters is 1 mg/kg or less.

### Means for Solving the Problems

The gist of the present invention resides in a method for producing crude palm oil from which free chlorine has been removed, as per stated in (1) to (5) below.
(1) A method for producing crude palm oil from which free chlorine has been removed, the method comprises a step of removing free chlorine from pressed palm oil after pressing in an oil extraction process and/or a step of removing free chlorine from crude palm oil before refining in a refining process.
(2) In the method for producing the crude palm oil from which free chlorine has been removed, according to above (1), the step of removing free chlorine is a step of removing free chlorine that is a substance causing formation of 3-monochloropropane-1,2-diol fatty acid esters.
(3) In the method for producing the crude palm oil from which free chlorine has been removed, according to above (1) or (2), the step of removing free chlorine is a step of washing with water once or more.
(4) In the method for producing the crude palm oil from which free chlorine has been removed, according to above (3), the water is pure water, ultra-pure water, distilled water, and/or deionized water, which contains no chlorine ions or from which chlorine ions have been removed.
(5) In the method for producing crude palm oil from which free chlorine has been removed, according to any of above (1) to (4), the crude palm oil from which free chlorine has been removed is crude palm oil in which formation of 3-monochloropropane-1,2-diol fatty acid esters is suppressed.
   The gist of the present invention further resides in crude palm oil, as per stated in (6) below.
(6) Crude palm oil wherein a content of free chlorine is reduced to 2 ppm or less with the production method according to any of above (1) to (5).
   The gist of the present invention still further resides in refined palm oil, as per stated in (7) below.
(7) Refined palm oil produced by refining the crude palm oil according to above (6), wherein a content of 3-monochloropropane- 1,2-diol fatty acid esters is 1 mg/kg or less.

### Advantageous Effects of the Invention

According to the present invention, refined palm oil in which formation of 3-monochloropropane- 1,2-diol fatty acid esters is suppressed can be obtained from the pressed palm oil after pressing in an oil extraction process and/or from the crude palm oil before refining in a refining process by adding a step of removing free chlorine, which is a substance causing the formation of 3-monochloropropane-1,2-diol fatty acid esters, through washing with water once or more.

According to the present invention, it is possible to inexpensively produce refined palm oil because of only using water without alkaline chemicals, absorbents such as silica gel and activated carbon, and obtain high-quality fatty acids, without generating alkali foots as with the physical refining, and suppress the formation of 3-monochloropropane-1,2-diol fatty acid esters.

### Brief Description of the Drawings

[Fig. 1] Fig. 1 illustrates one example of flow of a known production process (oil extraction process) for crude palm oil.
[Fig. 2] Fig. 2 illustrates one example of flow of a known production process (refining process) for refined palm oil.
[Fig. 3] Fig. 3 illustrates one example of flow of a production process (oil extraction process) for crude palm oil, according to the present invention, the process including a step of removing free chlorine from pressed palm oil.
[Fig. 4] Fig. 4 illustrates one example of flow of a production process (refining process) for refined palm oil, according to the present invention, the process including a step of removing free chlorine from crude palm oil before refining.

### Mode for Carrying out the Invention

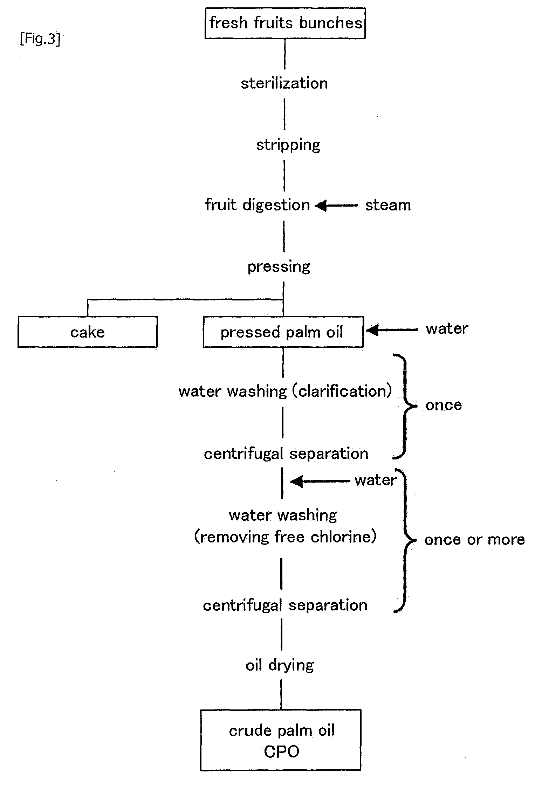

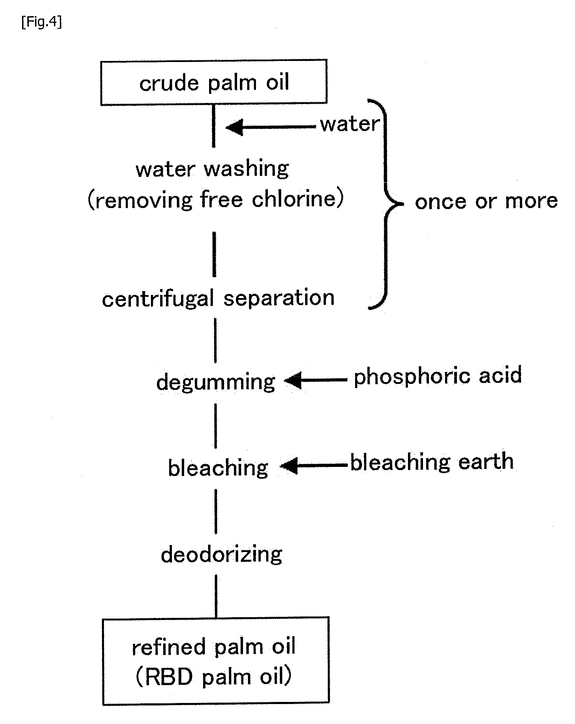

As illustrated in Figs. 3 and 4, a method for producing crude palm oil, according to the present invention, is featured in including a step of removing free chlorine from pressed palm oil after the pressing during production of the crude palm oil, and/or a step of removing free chlorine from the crude palm oil before refining in a refining process during production of refined palm oil. The step of removing free chlorine from the pressed palm oil is disposed after the pressing in the oil extraction process during the production of the crude palm oil, preferably after water washing (clarification), which is intended to remove palm fibers, etc. The step of removing free chlorine from the crude palm oil is disposed before refining, as a pre-treatment of the crude palm oil, in the refining process during the production of the refined palm oil.

In the present invention, the removal of free chlorine in the step of removing free chlorine implies that the content of free chlorine is reduced to such an extent as being able to sufficiently suppress the formation of 3-monochloropropane-1,2-diol fatty acid esters, preferably to the content of free chlorine of 2 ppm or less.

The removal of free chlorine is intended to remove free chlorine that is a substance causing the formation of 3-monochloropropane-1,2-diol fatty acid esters. Accordingly, the crude palm oil from which free chlorine has been removed, preferably in which the content of free chlorine is reduced to 2 ppm or less, can also be said as the crude palm oil in which the formation of 3-monochloropropane-1,2-diol fatty acid esters is suppressed. The refined palm oil is provided in which a content of 3-monochloropropane-1,2-diol fatty acid esters is reduced to 1 mg/kg or less by refining the crude palm oil.

The step of removing free chlorine means a step of washing with water once or more. The water used in the water washing to remove free chlorine is preferably, for example, pure water, ultra-pure water, distilled water, or deionized water, which contains no chlorine ions or from which chlorine ions have been removed. Furthermore, the water is used at a temperature of 20 to 80 degrees C in amount of 5 to 100 % by weight with respect to the oil. Stated another way, the water washing is performed once or more, preferably twice or more, with intent to remove free chlorine from the pressed palm oil after pressing in the oil extraction process during the production of the crude palm oil, and/or from the crude palm oil before refining in the refining process during the production of refined palm oil, i.e., in a stage before substantial refining (degumming, bleaching, and deodorizing).

As seen from the results of Examples, free chlorine cannot be sufficiently removed by the one conventional operation of water washing (clarification) for removing palm fibers. In contrast, free chlorine, which is a substance causing the formation of 3-monochloropropane-1,2-diol fatty acid esters, can be removed by adding the step of removing free chlorine according to the present invention, i.e., the step of washing with the water containing no chlorine at 80 degrees C once or more, preferably twice or more.

In comparison with the current production method of the physical refining after the water washing (clarification) to remove impurities, such as palm fibers, in the pressed palm oil, the present invention can significantly suppresse an amount of 3-monochloropropane-1,2-diol fatty acid esters formed in the refined palm oil, as listed below, by the method of the physical refining adding washing the oil with water (pure water containing no free chlorine) once or more to remove free chlorine.
Comparative Example 1 (prior art): 3.3 mg/kg
Example 1 (one operation of water washing to remove free chlorine): 0.9 mg/kg
Example 2 (two operations of water washing to remove free chlorine): 0.5 mg/kg

In addition, even when the water washing is performed twice with tap water (content of free chlorine: 15 mg/L) in the step of removing free chlorine in the present invention, an amount of 3-monochloropropane-1,2-diol fatty acid esters formed in the refined palm oil can be suppressed to 0.7 mg/kg (Example 4).

Concrete Examples and Comparative Example will be described below, but the present invention is not limited to the following Examples.

### [Analysis Method]

### (1) Method of measuring content of 3-monochloropropane-1,2-diol fatty acid esters

Glycidol and glycidol fatty acid esters in the palm oil were decomposed using sulfuric acid and methanol to cleave the esters. After the resultants were derivatized with phenylbonic acid, quantities of 3-monochloropropane-1,2-diol fatty acid esters and 3-monochloropropane-1,2-diol were determined collectively as a quantity of 3-monochloropropane-1,2-diol by GC/MS (see Non-Patent Document 1).

### (2) Method of measuring content of free chlorine

10 grams of pure water in a half amount of the sample oil was added to 20 grams of sample oil heated to 80 degrees C, and shook the mixture at 80 degrees C for 10 minutes, and then separated the water therefrom through centrifugal separation. An aqueous solution containing chlorine ions was obtained by repeating twice operations. After preparing calibration curves in the range of 0 ppm to 2 ppm with chlorine ion standard solutions, and diluting the above-obtained aqueous solution such that a chlorine concentration was held in the calibration curve range, an amount of chlorine ions was measured by ion chromatograph (850 Professional IC made by Metrohm).

### EXAMPLES

### [Comparative Example 1]

Crude palm oil was obtained through water washing (clarification) of the pressed palm oil to remove palm fibers, etc. and drying the resultant oil (Fig.1). The amount of free chlorine in the crude palm oil was 5.2 ppm. The refined palm oil (RBD palm oil) was obtained by the physical refining (Fig. 2) under the following conditions. The content of 3-monochloropropane-1,2-diol fatty acid esters in the refined palm oil was 3.3 mg/kg.

### <Physical Refining Process>

Degumming: 0.1 % by weight of a 75 % phosphoric acid solution was added to the crude palm oil, and the mixture was stirred at 40 degrees C for 15 minutes.

Bleaching: 2 % by weight of activated earth was added to the crude palm oil, and the mixture was stirred at 105 degrees C for 20 minutes under reduced pressure, followed by filtration.

Deodorizing: deodorizing was performed by blowing 2.5 % by weight of steam into bleached palm oil maintaining at 250 degrees C for 60 minutes under vacuum.

### [Example 1]

As illustrated in Fig. 3, the crude palm oil was obtained by once a water-washing process of adding 20 % by weight of pure water (80 degrees C) to pressed palm oil (80 degrees C), which had been subjected to the water washing (clarification) once to remove palm fibers etc., stirring the mixture, and removing a water layer by centrifugal separation, and thereafter drying the palm oil. The amount of free chlorine in the crude palm oil was 1.6 ppm. The refined palm oil (RBD palm oil) was obtained by the physical refining (degumming, bleaching, and deodorizing) of the crude palm oil in a same way as Comparative Example 1. The content of 3-monochloropropane-1,2-diol fatty acid esters in the refined palm oil was 0.9 mg/kg.

### [Example 2]

As illustrated in Fig. 3, the crude palm oil was obtained by twice the water-washing process of adding 20 % by weight of pure water (80 degrees C) to pressed palm oil (80 degrees C), the pressed palm oil which had been subjected once to the water washing (clarification) to remove palm fibers etc. after the pressing, stirring the mixture, removing a water layer by centrifugal separation, and thereafter drying the palm oil. The amount of free chlorine in the crude palm oil was 0.4 ppm. Refined palm oil (RBD palm oil) was obtained by the physical refining (degumming, bleaching, and deodorizing) of the crude palm oil in a same way as Comparative Example 1. The content of 3-monochloropropane-1,2-diol fatty acid esters in the refined palm oil was 0.5 mg/kg.

### [Example 3]

As illustrated in Fig. 4, the crude palm oil was obtained by heating the crude palm oil obtained in Comparative Example 1 to 80 degrees C, adding 20 % by weight of pure water (80 degrees C) to the heated crude palm oil for water-washing, stirring the mixture, and removing a water layer by centrifugal separation, thereafter the resultant oil was processed by the same above steps again.

The amount of free chlorine in the crude palm oil was 0.4 ppm. It was confirmed that the crude palm oil was equivalent to the quality of the crude palm oil obtained in Example 2. Furthermore, when the crude palm oil was then subjected to the physical refining (degumming, bleaching, and deodorizing), similar results to Example 2 was obtained and the content of 3-monochloropropane-1,2-diol fatty acid esters in the refined palm oil was 0.5 mg/kg.

The results of Comparative Example 1 and Examples 1, 2 and 3 are listed in Table 1.

**[Table 1]**

| | Content of free chlorine in crude palm oil before refining | Refining method | (A) | (B) |
|---|---|---|---|---|
| Comparative Example 1 | 5.2 ppm | physical refining | 3.3 ppm | × |
| Example 1 | 1.6 ppm | physical refining | 0.9 ppm | ○ |
| Example 2 | 0.4 ppm | physical refining | 0.5 ppm | ⊚ |
| Example 3 | 0.4 ppm | physical refining | 0.5 ppm | ⊚ |
| Example 4 | 0.8 ppm | physical refining | 0.7 mg/kg | ○ |

| | | | | |
|---|---|---|---|---|
| (A) Content of 3-monochloropropane-1,2-diol (3-MCPD) fatty acid esters in refined palm oil (value converted in terms of 3-MCPD) (B) Effect of suppressing formation of 3-monochloropropane-1,2-diol fatty acid esters | | | | |

### (Evaluation Method)

⊚ Very good (the content of 3-monochloropropane-1,2-diol fatty acid esters in the refined palm oil was 0.5 mg/kg or less)
○ Good (the content of 3-monochloropropane- 1,2-diol fatty acid esters in the refined palm oil was 1 mg/kg or less)
Δ Slightly bad (the content of 3-monochloropropane-1,2-diol fatty acid esters in the refined palm oil was 2 mg/kg or less)
× Bad (the content of 3-monochloropropane-1,2-diol fatty acid esters free chlorine in the refined palm oil was 2 mg/kg or more)

### [Example 4]

As illustrated in Fig. 4, the crude palm oil was obtained by heating the crude palm oil obtained in Comparative Example 1 to 80 degrees C, adding 20 % by weight of tap water (content of free chlorine: 15 mg/L, 80 degrees C) to the heated crude palm oil for water-washing, stirring the mixture, and removing a water layer by centrifugal separation, thereafter the resultant oil was processed by the same above steps again.

The amount of free chlorine in the crude palm oil was 0.8 ppm. The refined palm oil (RBD palm oil) was obtained by the physical refining (degumming, bleaching, and deodorizing) of the crude palm oil in a same way as Comparative Example 1. The content of 3-monochloropropane-1,2-diol fatty acid esters in the refined palm oil was 0.7 mg/kg.

The results of Example 4 are listed in Table 2.

**[Table 2]**

| | Content of free chlorine in crude palm oil before refining | Refining method | (A) | (B) |
|---|---|---|---|---|
| Example 4 | 0.8 ppm | physical refining | 0.7 mg/kg | ○ |

| | | | | |
|---|---|---|---|---|
| (A) Content of 3-monochloropropane-1,2-diol (3-MCPD) fatty acid esters in refined palm oil (values converted in terms of 3-MCPD) (B) Effect of suppressing formation of 3-monochloropropane-1,2-diol fatty acid esters | | | | |

The evaluation method is the same as in Table 1

### Industrial Applicability

The method of producing crude palm oil, has some features in the physical refining process, and exhibits many advantages i.e., not generating alkali foots, ensuring a high yield, and providing fatty acids with good quality, and further it can suppress formation of 3-monochloropropane-1,2-diol fatty acid esters. Furthermore, the crude palm oil can be produced inexpensively, since only water is used without alkaline chemicals, adsorbents such as silica gel and activated carbon, and enzymes.

It is highly expectable that the present invention contributes to providing refined palm oil in which formation of 3-monochloropropane- 1,2-diol fatty acid esters is suppressed.

## Claims

1. A method for producing crude palm oil from which free chlorine has been removed, the method comprises a step of removing free chlorine from pressed palm oil after pressing in an oil extraction process and/or a step of removing free chlorine from crude palm oil before refining in a refining process.

2. The method for producing the crude palm oil from which free chlorine has been removed according to claim 1, wherein the step of removing free chlorine is a step of removing free chlorine that is a substance causing formation of 3-monochloropropane-1,2-diol fatty acid esters.

3. The method for producing the crude palm oil from which free chlorine has been removed according to claim 1 or 2, wherein the step of removing free chlorine is a step of washing with water once or more.

4. The method for producing the crude palm oil from which free chlorine has been removed according to claim 3, wherein the water is pure water, ultra-pure water, distilled water, and/or deionized water, which contains no chlorine ions or from which chlorine ions have been removed.

5. The method for producing the crude palm oil from which free chlorine has been removed according to any of claims 1 to 4, wherein the crude palm oil from which free chlorine has been removed is crude palm oil in which formation of 3-monochloropropane-1,2-diol fatty acid esters is suppressed.

6. Crude palm oil wherein a content of free chlorine is reduced to 2 ppm or less with the production method according to any of claims 1 to 5.

7. Refined palm oil produced by refining the crude palm oil according to claim 6, wherein a content of 3-monochloropropane- 1,2-diol fatty acid esters is 1 mg/kg or less.
